# EUROPEAN PATENT SPECIFICATION

(11) **EP 2 518 892 B1**
(45) Date of publication and mention of the grant of the patent: **04.03.2015**
(21) Application number: 11003518.5
(22) Date of filing: 29.04.2011
(51) Int. Cl.: H02P 25/24

(54) **A control system for an electric motor of a cooling fan**
Steuersystem für einen Elektromotor eines Kühlgebläses
Système de contrôle pour moteur électrique d'un ventilateur de refroidissement

(43) Date of publication of application: 31.10.2012
(73) Proprietor: Electrolux Home Products Corporation N.V., 1130 Brussels (BE)
(72) Inventor: Leidig, Karl, Dr., 91610 Insingen (DE); Herzog, Michael, 91610 Insingen (DE)
(74) Representative: Baumgartl, Gerhard Willi

(56) References cited:
- EP-A1- 1 615 328
- DE-A1- 2 838 716
- DE-A1- 3 702 952
- DE-A1-102004 017 624

## Description

The present invention relates to a control system for an electric motor of a cooling fan. In particular, the present invention relates to a control system for an electric motor of a cooling fan in a household appliance. Further, the present invention relates to a cooling system for a household appliance. Moreover, the present invention relates to a household appliance, in particular a cooking appliance.

Household appliances, especially cooking appliances include a cooling fan system in order to keep the temperatures of the surfaces and components below a predetermined critical level. The cooling fans are usually driven by shaded pole motors. Said shaded pole motors are provided by low costs and have a relative long life time. The speed of the shaded pole motor can be regulated from zero to a maximum value by adjusting the alternating current supply voltage. This is usually achieved by microprocessor controlled inverters. The microprocessor controlled inverters are costly and reduce the reliability of the whole cooling system.

CN 2 847 775 Y discloses an electromagnetic stove with a stepless speed changing heat radiation. A temperature sensor control circuit comprises a negative temperature coefficient (NTC) sensor. The temperature sensor control circuit requires a microprocessor.

KR 10 2006 0062208 A describes a fan motor control circuit of a microwave oven. The fan motor control circuit comprises a negative temperature coefficient resistance element and a fixed resistance element. Said negative temperature coefficient resistance element and fixed resistance element are connected in parallel.
DE 3702952 A discloses a control system for an electric motor of a cooling fan. The control system includes at least a capacitor connected in series with the fan motor. A PCT resistor is connected in parallel to the capacitor and located in the air discharge flow.

GB 1 023 517 discloses a controlling thermal device for a motor of a fan. A resistor element is connected in parallel with a set of contact elements. By opening and closing said contact elements two speeds of the motor can be adjusted.

It is an object of the present invention to provide a control system for an electric motor of a cooling fan, which is provided by low costs and allows a stepless adjusting of the speed and a relative high reliability.

The object of the present invention is achieved by the control system for an electric motor of a cooling fan according to claim 1.

The present invention relates to a control system for an electric motor of a cooling fan, wherein:
- the control system is interconnected or interconnectable within an alternating current supply circuit of the electric motor,
- the control system is connected or connectable in series to the electric motor,
- the control system includes at least one negative temperature coefficient thermistor,
- the control system includes at least one first capacitor arranged parallel to the negative temperature coefficient thermistor, and
- the control system includes at least one second capacitor arranged in series to the negative temperature coefficient resistor and the first capacitor.

The main idea of the present invention is the exclusive use of passive electric components for the control system. The passive electric components are the negative temperature coefficient thermistor and the capacitors. The control system allows the stepless adjusting of the speed of the electric motor over the complete range. The control system allows a reduction of energy consumption without any extensive electronic equipment.

According to a preferred embodiment of the present invention the electric motor is a shaded pole motor. The shaded pole motor may be provided by low costs and has a relative long life time.

According to a special embodiment of the present invention, the control system may include a series of negative temperature coefficient thermistors arranged in parallel with the first capacitor. The series of negative temperature coefficient thermistors contribute to the reliability of the control system.

For example, the first capacitor may comprise a plurality of capacitors arranged in series and/or in parallel. In a similar way, the second capacitor comprises a plurality of capacitors arranged in series and/or in parallel.

Further, the control system may include means for turning up the speed of the electric motor and resetting the speed of the electric motor according to starting conditions. This is an additional safety function in order to avoid a high speed for a too long time.

For example, the control system is provided for a household appliance. In particular, the control system is provided for a cooking appliance.

Further, the present invention relates to a cooling system for a household appliance, in particular for a cooking appliance, comprising at least one cooling fan driven by an electric motor, wherein the cooling system includes at least one control system for the electric motor described above.

At last, the present invention relates to a household appliance, in particular a cooking appliance, comprising at least one cooling fan driven by an electric motor, wherein the household appliance includes at least one control system for the electric motor as mentioned above.

Novel and inventive features of the present invention are set forth in the appended claims.

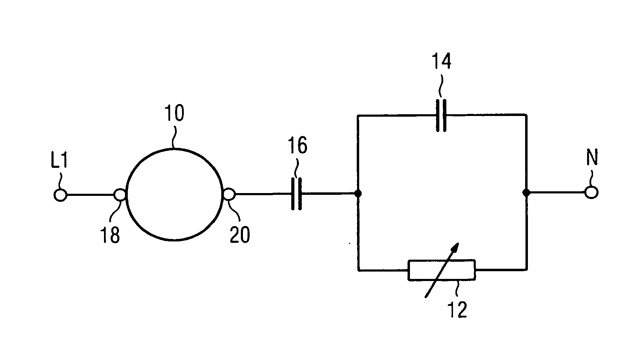

The present invention will be described in further detail with reference to the drawings, in which
FIG 1 illustrates a schematic circuit diagram of a control system for an electric motor of a cooling fan in a household appliance according to a preferred embodiment of the present invention.

FIG 1 illustrates a schematic circuit diagram of a control system for an electric motor 10 of a cooling fan in a household appliance according to a preferred embodiment of the present invention. The electric motor 10 is provided for driving the cooling fan.

The control system includes a negative temperature coefficient (NTC) thermistor 12, a first capacitor 14 and a second capacitor 16. The negative temperature coefficient thermistor 12 and the first capacitor 14 are connected in parallel. The second capacitor 16 on the one hand and the parallel negative temperature coefficient thermistor 12 and first capacitor 14 on the other hand are connected in series.

The control system and the electric motor 10 are connected in series within an altering current supply. A first terminal 18 of the electric motor 10 is connected to a phase conductor L1 of the altering current supply. A second terminal 20 of the electric motor 10 is connected to the second capacitor 16 of the control system. The parallel negative temperature coefficient thermistor 12 and the first capacitor 14 of the control system are connected to a neutral conductor N of the altering current supply.

The control system includes only passive electric components, i.e. the negative temperature coefficient thermistor 12 and the capacitors 14 and 16. The control system allows the stepless adjusting of the speed of the electric motor 10 over the complete range. The inventive control system allows a reduction of energy consumption without any extensive electronic equipment.

In particular, the negative temperature coefficient thermistor 12 is arranged in a specific place of the household appliance. Said specific place has to be cooled by the cooling fan, when the temperature tends to increase during the operation of the household appliance. Thus, the control system is a thermomechanical feedback loop within the cooling system.

The inventive control system allows an increased reliability of the cooling system. The cooling fan is only activated on demand. The control system allows a continuous and dynamic adjustment of the cooling power. The power and the speed of the electric motor 10 can be adjusted from 0 % to 100 %. The negative temperature coefficient thermistor 12 may be arranged in an area of interest, so that a direct temperature control is possible.

The passive electric components, namely the negative temperature coefficient thermistor 12 and the capacitors 14 and 16, generate no bothering noise.

The negative temperature coefficient thermistor 12 may be designed in such a way that the heat generated by the electric current flow has a lower effect to the response of the electric motor 10 than the heat generated by cooking or heating components of the household appliance.

Instead of the negative temperature coefficient thermistor 12 a series of several negative temperature coefficient thermistors may be arranged in parallel with the first capacitor 14.

Instead of the first capacitor 14 and the second capacitor 16, respectively, a set of several capacitors may be used. In this case, said several capacitors may be connected in parallel and/or in series.

### List of reference numerals

- 10: electric motor
- 12: negative temperature coefficient (NTC) thermistor
- 14: first capacitor
- 16: second capacitor
- 18: first terminal of the electric motor
- 20: second terminal of the electric motor

- L1: phase conductor
- N: neutral conductor

## Claims

1. A control system for an electric motor (10) of a cooling fan, wherein:
- the control system is interconnected or interconnectable within an alternating current supply circuit (L1, N) of the electric motor (10),
- the control system is connected or connectable in series to the electric motor (10),
- the control system includes at least one negative temperature coefficient NTC thermistor (12),
- the control system includes at least one first capacitor (14) arranged parallel to the negative temperature coefficient thermistor (12), and
- the control system includes at least one second capacitor (16) arranged in series to the negative temperature coefficient thermistor (12) and the first capacitor (14).

2. The control system according to claim 1,
**characterized in, that**
the electric motor (10) is a shaded pole motor.

3. The control system according to claim 1 or 2,
**characterized in, that**
the control system includes a series of negative temperature coefficient thermistors (12) arranged in parallel with the first capacitor (14).

4. The control system according to any one of the preceding claims,
**characterized in, that**
the first capacitor (14) comprises a plurality of capacitors arranged in series and/or in parallel.

5. The control system according to any one of the preceding claims,
**characterized in, that**
the second capacitor (16) comprises a plurality of capacitors arranged in series and/or in parallel.

6. The control system according to any one of the preceding claims,
**characterized in, that**
the control system includes means for turning up the speed of the electric motor (10) and resetting the speed of the electric motor (10) according to starting conditions.

7. The control system according to any one of the preceding claims,
**characterized in, that**
the control system is provided for a household appliance.

8. The control system according to any one of the preceding claims,
**characterized in, that**
the control system is provided for a cooking appliance.

9. A cooling system for a household appliance, in particular for a cooking appliance, comprising at least one cooling fan driven by an electric motor (10),
**characterized in, that**
the cooling system includes at least one control system for the electric motor (10) according to any one of the claims 1 to 8.

10. A household appliance, in particular a cooking appliance, comprising at least one cooling fan driven by an electric motor (10),
**characterized in, that**
the household appliance includes at least one control system for the electric motor (10) according to any one of the claims 1 to 8.

## Patentansprüche

1. Steuersystem für einen Elektromotor (10) eines Kühlgebläses, wobei:
- das Steuersystem in einen Wechselstromversorgungskreislauf (L1, N) des Elektromotors (10) zwischengeschaltet oder zwischenschaltbar ist,
- das Steuersystem in Serie mit dem Elektromotor (10) geschaltet oder schaltbar ist,
- das Steuersystem wenigstens einen negativen Temperaturkoeffizient-NTC-Thermistor (12) umfasst,
- das Steuersystem wenigstens einen ersten Kondensator (14) umfasst, welcher parallel zum negativen Temperaturkoeffizient-Thermistor (12) angeordnet ist, und
- das Steuersystem wenigstens einen zweiten Kondensator (16) umfasst, welcher in Serie mit dem negativen Temperaturkoeffizient-Thermistor (12) und dem ersten Kondensator (14) angeordnet ist.

2. Steuersystem nach Anspruch 1,
**dadurch gekennzeichnet, dass**
der Elektromotor (10) ein Spaltpolmotor ist.

3. Steuersystem nach Anspruch 1 oder 2,
**dadurch gekennzeichnet, dass**
das Steuersystem eine Reihe von negativen Temperaturkoeffizient-Thermistoren (12) umfasst, welche parallel zum ersten Kondensator (14) angeordnet sind.

4. Steuersystem nach jedem beliebigen der vorangehenden Ansprüche,
**dadurch gekennzeichnet, dass**
der erste Kondensator (14) eine Mehrzahl von Kondensatoren umfasst, welche in Serie und/oder parallel angeordnet sind.

5. Steuersystem nach jedem beliebigen der vorangehenden Ansprüche,
**dadurch gekennzeichnet, dass**
der zweite Kondensator (16) eine Mehrzahl von Kondensatoren umfasst, welche in Serie und/oder parallel angeordnet sind.

6. Steuersystem nach jedem beliebigen der vorangehenden Ansprüche,
**dadurch gekennzeichnet, dass**
das Steuersystem Mittel zum Erhöhen der Geschwindigkeit des Elektromotors (10) und zum Rückstellen der Geschwindigkeit des Elektromotors (10) gemäß der Startbedingungen umfasst.

7. Steuersystem nach jedem beliebigen der vorangehenden Ansprüche,
**dadurch gekennzeichnet, dass**
das Steuersystem für ein Haushaltsgerät vorgesehen ist.

8. Steuersystem nach jedem beliebigen der vorangehenden Ansprüche,
**dadurch gekennzeichnet, dass**
das Steuersystem für ein Kochgerät vorgesehen ist.

9. Kühlsystem für ein Haushaltsgerät, insbesondere für ein Kochgerät, umfassend wenigstens ein Kühlgebläse, welches durch einen Elektromotor (10) angetrieben ist,
**dadurch gekennzeichnet, dass**
das Kühlsystem wenigstens ein Steuersystem für den Elektromotor (10) gemäß einem beliebigen der Ansprüche 1 bis 8 umfasst.

10. Haushaltsgerät, insbesondere ein Kochgerät, welches wenigstens ein Kühlgebläse umfasst, das durch einen Elektromotor (10) angetrieben wird,
**dadurch gekennzeichnet, dass**
das Haushaltsgerät wenigstens ein Steuersystem für den Elektromotor (10) gemäß einem beliebigen der Ansprüche 1 bis 8 aufweist.

## Revendications

1. Système de commande pour un moteur électrique (10) d'un ventilateur de refroidissement,
- ce système de commande étant interconnecté ou interconnectable à l'intérieur d'un circuit d'alimentation en courant alternatif (L1, N) du moteur électrique (10),
- ce système de commande étant connecté ou connectable en série au moteur électrique (10),
- ce système de commande comprenant au moins au moins une thermistance NTC à coefficient de température négatif (12),
- ce système de commande comprenant au moins un premier condensateur (14) disposé en parallèle à la thermistance à coefficient de température négatif (12), et
- ce système de commande comprenant au moins un deuxième condensateur (16) disposé en série à la thermistance à coefficient de température négatif (12) et au premier condensateur (14).

2. Système de commande selon la revendication 1,
**caractérisé en ce que**
le moteur électrique (10) est un moteur à bague de déphasage.

3. Système de commande selon la revendication 1 ou 2,
**caractérisé en ce que**
ce système de commande comprend une série de thermistances à coefficient de température négatif (12) disposées en parallèle au premier condensateur (14).

4. Système de commande selon l'une quelconque des revendications précédentes,
**caractérisé en ce que**
le premier condensateur (14) comprend une pluralité de condensateurs disposés en série et/ou en parallèle.

5. Système de commande selon l'une quelconque des revendications précédentes,
**caractérisé en ce que**
le deuxième condensateur (16) comprend une pluralité de condensateurs disposés en série et/ou en parallèle,

6. Système de commande selon l'une quelconque des revendications précédentes,
**caractérisé en ce que**
ce système de commande comprend un moyen pour augmenter la vitesse du moteur électrique (10) et remettre à l'état initial la vitesse du moteur électrique (10) selon les conditions de démarrage.

7. Système de commande selon l'une quelconque des revendications précédentes,
**caractérisé en ce que**
ce système de commande est prévu pour un appareil électroménager.

8. Système de commande selon l'une quelconque des revendications précédentes,
**caractérisé en ce que**
ce système de commande est prévu pour un appareil de cuisson.

9. Système de refroidissement pour un appareil électroménager, en particulier pour un appareil de cuisson, comprenant au moins un ventilateur de refroidissement entraîné par un moteur électrique (10),
**caractérisé en ce que**
ce système de refroidissement comprend au moins un système de commande pour le moteur électrique (10) selon l'une quelconque des revendications 1 à 8.

10. Appareil électroménager, en particulier appareil de cuisson, comprenant au moins un ventilateur de refroidissement entraîné par un moteur électrique (10),
**caractérisé en ce que**
cet appareil électroménager comprend au moins un système de commande pour le moteur électrique (10) selon l'une quelconque des revendications 1 à 8.
